# EUROPEAN PATENT APPLICATION

(11) **EP 2 159 105 A1**
(43) Date of publication of application: **03.03.2010**
(21) Application number: 08740511.4
(22) Date of filing: 16.04.2008
(51) Int. Cl.: B60R 7/04, E02F 9/16

(54) **CONSOLE HEIGHT ADJUSTMENT DEVICE FOR CONSTRUCTION MACHINE**

(30) Priority: 15.06.2007 JP 2007159028
(71) Applicant: Caterpillar Japan Ltd., Tokyo 158-8530 (JP)
(72) Inventor: AKAHANE, Eiji, Tokyo 158-8530 (JP); YAMADA, Teruyuki, Kobe-shi Hyogo 652-0863 (JP); NOMURA, Shiro, Tokyo 105-0012 (JP)
(74) Representative: advotec.
(86) International application number: PCT/JP2008/057432
(87) International publication number: WO 2008/152860

(57) **Abstract**

In adjustment of the height of a console in a construction machine, an apparatus for adjusting the height of the console can adjust the height with ease without largely shifting the position of an operation lever in the front-rear direction.

The apparatus includes a supporting element 1, being arranged on the side of the driver's seat and extending in the direction from the front to the rear of the driver' s seat, that upwardly supports the console; an axis element 2, horizontally extending in the direction between the right side and the left side of the driver' s seat, being supported rotatably with respect to the driver's seat; a first supporting axis 7, being engaged with the driver's seat, that supports a first end of the supporting element 1 such that the first end of the supporting element 1 slides in the direction from the front to the rear of the driver's seat and pivots around the first supporting axis 7; a swinging element 4 having a first end which is engaged with the axis element 2 and which is pivotable around the center axis of the axis element 2; and a second supporting axis 8, being engaged with a second end of the swinging element 4, around which a second end of the supporting element 1 pivots.

## Description

### TECHNICAL FIELD

The present invention relates to an apparatus for adjusting height of a console arranged at a side of the driver's seat in a construction machine.

### BACKGROUND OF THE INVENTION

A console for a conventional construction machine includes a mechanism to adjust the height of the console. A console is a control board which has an operation lever and various control switches. Two consoles are provided one on each side of the driver's seat in a cab. In most cases, a mechanism for adjusting the height of the console is provided independently of the mechanism to adjust the height of the driver' s seat, so that the height of the console can be adjusted freely in accordance with the operator's frame and posture while operating and the position of the driver's seat.

Patent Reference 1 discloses an operation stand including two supporting mechanisms that support the front and the rear ends of a console of a construction machine. The disclosed configuration supports the rear end of the console rotatable in relation to the driver' s seat and fixes the front end of the console to one of a number of positions of different height. The technique of the Patent Reference 1 pivots the entire console around the supported point at the rear end of the console by variation in the supported height of the front end of the console, so that the height of the console can be varied.

Patent Reference 2 discloses a configuration for fixing a console to the attachment board provided on the floor of the driver' s compartment of a construction machine via fixing elements which configuration forms a number of position adjusting holes different in the upright position on each of the attachment board and the console, which are to be fixed to each other by connecting one of the holes on each element via fixing elements inserted into these holes. In this configuration, formation of sets of holes arranged in the upright direction which sets are arranged in the left-right direction can move the entire console in the upright direction, keeping the entire console in a horizontal position.
[Patent Reference 1] Japanese Patent Application Laid-Open (KOKAI) No. HEI 7-90881
[Patent Reference 2] Japanese Patent Application Laid-Open (KOKAI) No. HEI 11-303140

### DISCLOSURE OF THE INVENTION

### PROBLEMS TO BE SOLVED BY THE INVENTION

However, the disclosure of Patent Reference 1 means that the entire console pivots in the adjustment of the height thereof, accompanying the movement of the console in the front-rear direction. For this reason, after the height adjustment of the console, there may be a requirement for adjustment of the position of the driver's seat in the front-rear position, which annoys the driver.
On the other hand, in the technique disclosed in Patent Reference 2, a variation in the height of the console does not accompany the movement of the console in the front-rear direction. However, adjusting the height of the console requires the extraction and insertion of a number of fixing elements, which does not improve the ease of adjustment.

In addition, since the above adjusting mechanism with fixing elements adjusts the height of the console to one of a number of predetermined stepwise heights, the technique does not allow a minute adjustment.
Patent Reference 2 discloses an alternative configuration in which the connection holes through which fixing elements are inserted are shaped into ellipses with the major axis in the upright direction in order to make stepless adjustment possible. In this case, the fixing elements inserted into slot holes have to occupy contact areas to support the weight of the entire console so that the washers and the bolts can be of large. Therefore, it is difficult to realize such a configuration as a solution. Further, that makes it difficult to make the height of the opposite consoles the same, and consequently another problem arises.

With the foregoing problems in view, the object of the present invention is to provide an apparatus for adjusting height of a console which allows easy and minute adjustment, while avoiding a large variation in the position of an operation lever in the front-rear direction.

### MEANS TO SOLVE THE PROBLEM

To attain the above object, there is provided, according to claim 1, an apparatus for adjusting height of a console which includes an operation lever and which is provided on one side of a driver' s seat of a construction machine, including: a supporting element, being arranged on the side of the driver's seat and extending in the direction from the front to the rear of the driver's seat, that upwardly supports the console; an axis element, horizontally extending in the direction between the right side and the left side of the driver' s seat, being supported rotatably with respect to the driver's seat; a first supporting axis, being engaged with the driver's seat, that supports a first end of the supporting element such that the first end of the supporting element slides in the direction from the front to the rear of the driver's seat and pivots around the first supporting axis; a swinging element having a first end which is engaged with the axis element and which is pivotable around the center axis of the axis element; and a second supporting axis, being engaged with a second end of the swinging element, around which a second end of the supporting element pivots.

Here, the rotation of the axis element means rotation around the center of the axis element (in a limited range of rotation).
In addition to the feature of claim 1, an apparatus for adjusting height of console according to claim 2 has features that: a set comprising the console, the supporting element, the swinging element, the first supporting axis and the second supporting axis is provided each of both sides of the driver's seat; the each first supporting axis supports the first end of the supporting element arranged on the same side; and the each second end of the supporting element pivots around the second supporting axis arranged on the same side.

In addition to the feature of claim 1 or 2, an apparatus for adjusting height of console according to claim 3 further includes the structure of worm gear. The structure comprises: a worm wheel formed in a gear on an outer circumference of the axis element; and a worm element having a female screw that is fitted together with the worm wheel.
In addition to the feature of claim 3, an apparatus for adjusting height of console according to claim 4 has features that: the worm gear structure (i.e., the worm element and the worm wheel) is provided on a front side of the driver' s seat; the first supporting axis is provided on a rear side of the driver's seat and supports the rear end of the supporting element; and the front end of the supporting element pivots around the second supporting axis.

### Effect of The Invention

The apparatus (claim 1) for adjusting height of console rotates the axis element to rotate the supporting element around the center axis of the axis element and concurrently slides the supporting element with respect to the first supporting axis, so that the height of the console can be adjusted in conjunction with the supporting element. Since such a height adjustment describes an ellipse locus of the movement of any point on a console supported by the supporting element, it is possible to set such a locus of an operation lever that the amount of adjustment in the height direction increases, suppressing the amount of movement in the front-rear direction. In other words, the position of the operation lever can be moved in a substantially upright direction when the height is adjusted.

The apparatus (claim 2) for adjusting height of console can adjust the heights of the right and left consoles to the same distance at the same time, so that the requirement for balancing the heights of both consoles can be eliminated.
Since the apparatus (claim 3) for adjusting height of console rotates the axis element with the aid of the worm element and the worm wheel, the speed ratio of the axis element to the worm element can be set smaller. In other words, it is possible to avoid rotation transmission from the rotation of the axis element to the worm element, eliminating requirement for an apparatus and/or a mechanism to fix an adjusted portion of the console.

According to the apparatus (claim 4) for adjusting height of console, the arrangement of the axis element and the worm element on the front side of the seat makes it possible for the operator to adjust the height of the console while sitting in the driver's seat, thereby enhancing convenience.

### BRIEF DESCRIPTION OF THE DRAWINGS

[Fig. 1] A perspective view illustrating the entire configuration of an apparatus for adjusting the height of the console of a construction machine according to a first embodiment of the present invention;
[Fig. 2] A side view showing the driver's seat, to which an apparatus for adjusting the height of the console of a construction machine according to the first embodiment is applied, with the console at the lowest position;
[Fig. 3] A side view showing the driver's seat, to which an apparatus for adjusting the height of the console of a construction machine according to the first embodiment is applied, with the console at the highest position;
[Fig. 4] Schematic diagrams illustrating loci of an operation stick moved in accordance with adjustment of the height of the console by an apparatus for adjusting the height of the console of a construction machine according to the first embodiment; (a) being the locus described by the apparatus of the present invention, (b) being the locus described by a conventional technique pivotable around the rear end, and (c) and (d) being loci described by modifications to the present invention;
[Fig. 5] A perspective view illustrating a driver's seat to which an apparatus for adjusting the height of the console of a construction machine according to the first embodiment is applied; and
[Fig. 6] A perspective view illustrating the entire configuration of a construction machine with a driver's seat to which an apparatus for adjusting the height of the console of construction equipment according to the first embodiment is applied.

### DESCRIPTION OF SYMBOLS

- 1: supporting element
- 1a: slot hole
- 2: axis element
- 2a: axis end
- 2b: worm wheel
- 3: sliding plate
- 4: swinging element
- 5: supporting board
- 6: worm element
- 6a: height adjusting handle
- 7: first supporting axis
- 8: second supporting axis
- 9: frame
- 10: adjusting apparatus (apparatus for adjusting the height of the console)
- 12: seat adjuster
- 13: console
- 14: operation lever
- 15: arm rest
- 16: seat (driver's seat)
- 17: cab
- 20: hydraulic excavator (construction machine)

### BEST MODE FOR CARRYING OUT THE INVENTION

Hereinafter, a first embodiment of the present invention will now be described with reference to the accompanying drawings.

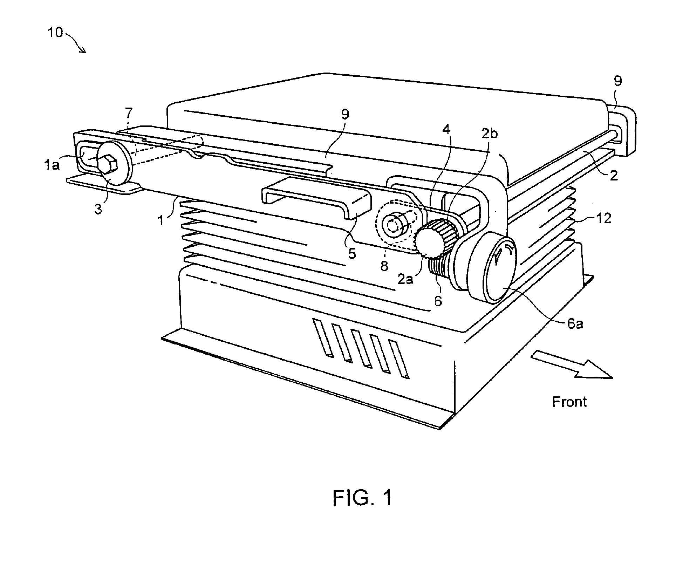

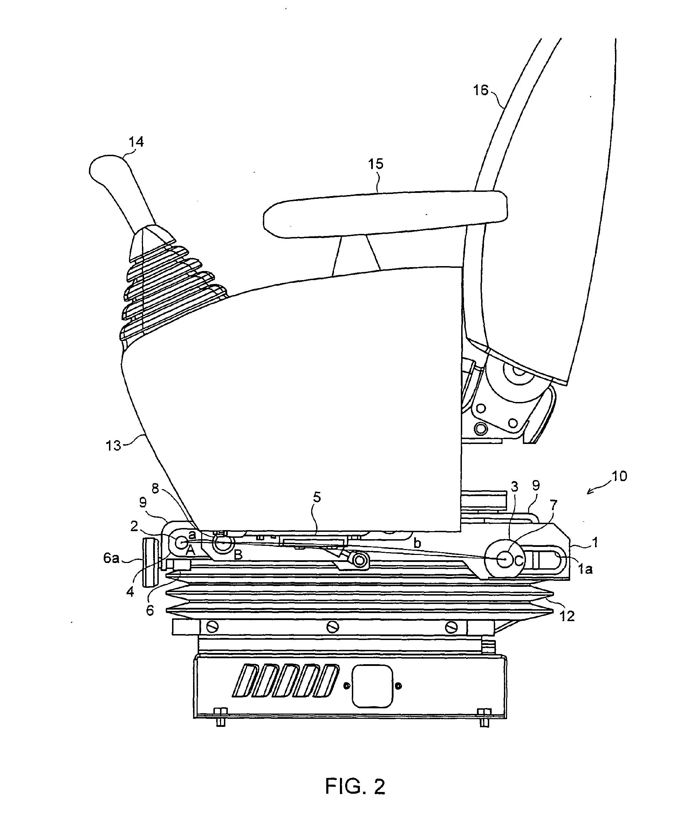

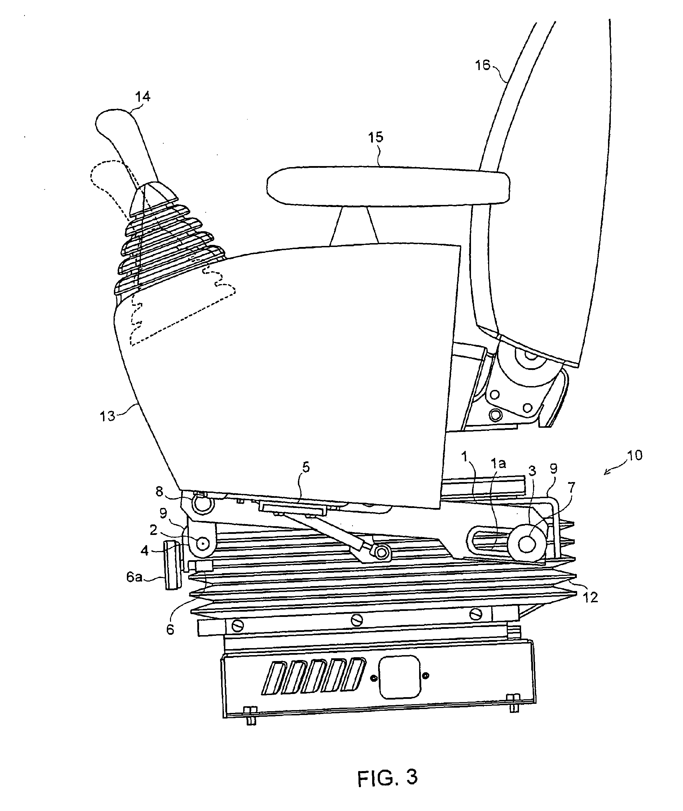

Figs. 1-6 are to be used in explanation of an apparatus for adjusting console height of a construction machine according to a first embodiment of the present invention. Fig. 1 is a perspective view illustrating the entire configuration of the adjusting apparatus of the present invention; Fig. 2 is a side view showing the driver's seat to which the apparatus of the first embodiment is applied with the console at the lowest position; and Fig. 3 is a side view showing the driver's seat to which the apparatus of the first embodiment is applied with the console at the highest position.

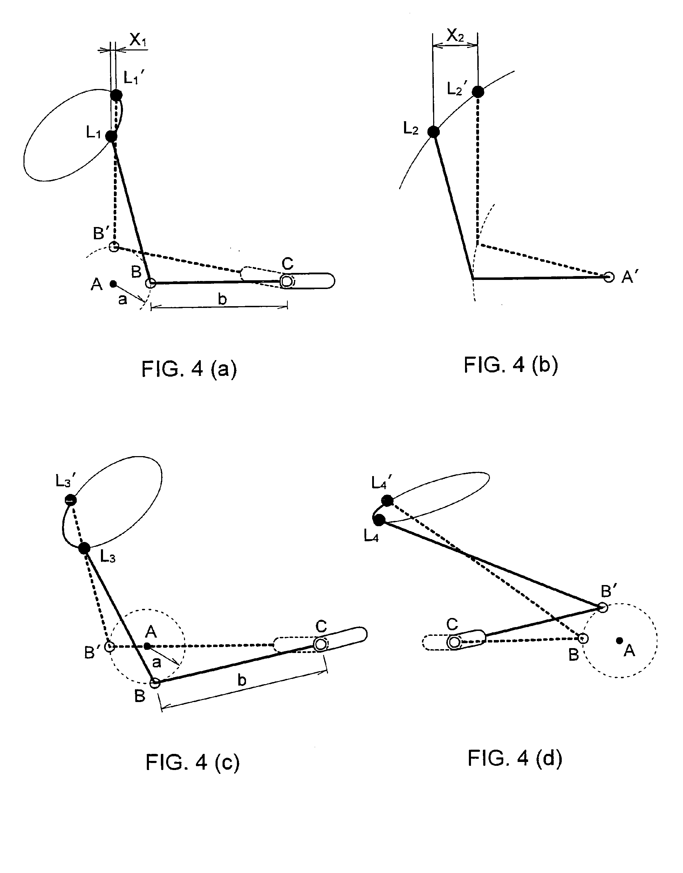

Figs. 4 (a) -4 (d) are schematic diagrams illustrating loci of an operation stick moved in accordance with adjustment of the height of the console; (a) being the locus described by the adjusting apparatus of the present invention, (b) being the locus described by a conventional technique pivotable around the rear end, and (c) and (d) being loci described by modifications to the present invention.

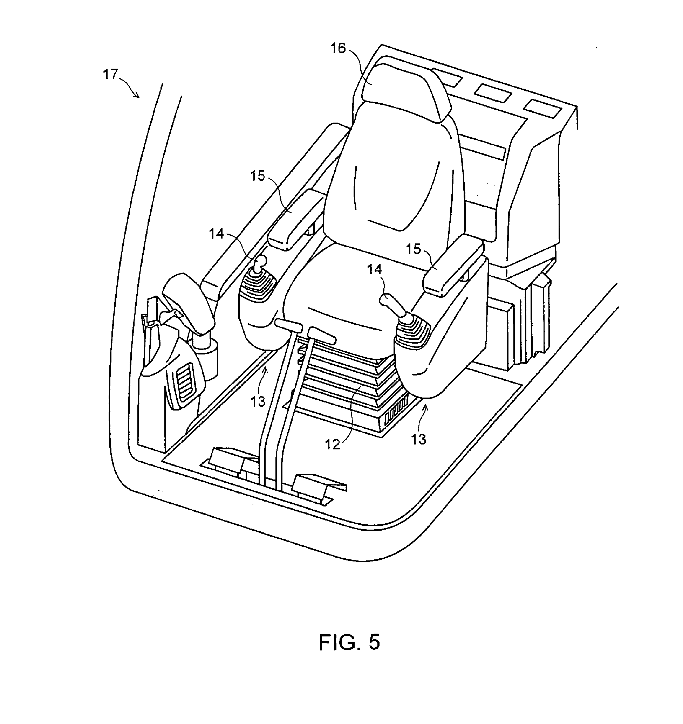

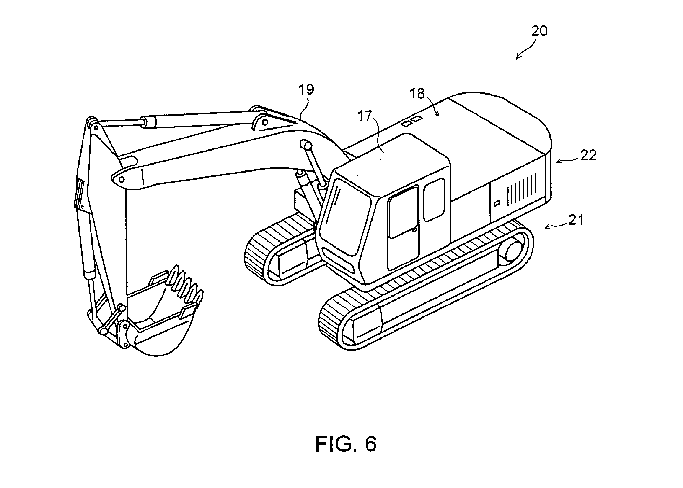

Fig. 5 is a perspective view of a driver's seat to which the adjusting apparatus of the present invention is applied and Fig. 6 is a perspective view illustrating the entire configuration of a construction machine with driver's seat to which the adjusting apparatus of the present invention is applied.

### [the outline of configuration]

The apparatus 10 for adjusting height of the console (hereinafter simply called an adjusting apparatus) according to the first embodiment is applied to a hydraulic excavator 20 illustrated in Fig. 6. The hydraulic excavator 20 includes a lower structure 21 equipped with a hydraulic movable mechanism formed on a crawler and an upper structure 22 rotatably arranged on the lower structure 21.

The upper structure 22 includes a hydraulic work equipment 19 extending forward of the machine, a cab 17 that is the operator's (driver's) compartment, an engine room 18 that accommodates the engine serving as the power source of various hydraulic units, a counter weight to balance the weight of the hydraulic excavator 20, and others.
As shown in Fig. 5, there is provided a seat (driver's seat) 16 for the operator in the cab 17. The seat 16 is arranged on the floor of the cab 17, being interposed by a seat adjuster 12. With this configuration, the position and the angle of the seat 16 can be adjusted to the operator' s frame and posture while operating hydraulic excavator 20 by moving and/or reclining the seat adjuster 12 in the front-rear direction and in the upright direction. Hereinafter, the front-rear direction, the left-right direction, and the upright direction are based on the cab 17 unless otherwise noted.

Consoles 13 are arranged one on each of the left and the right sides of the seat 16. Each console 13 includes an operation lever 14 to operate the work equipment 19, various control switches such as an acceleration dial to set the engine speed, and the like.
The operation lever 14 takes the form of a normal four-direction cross operation lever and is supported swingably in the front-rear direction and the left-right direction with respect to the console 13. On the upper surface of each console 13, an armrest 15 is arranged to support the operator's arm. The height of the armrest 15 can be manually adjusted with a non-illustrated lifting mechanism.

The adjusting apparatus 10 adjusts the heights of the consoles 13 by varying the relative position of the consoles 13 to the seat adjuster 12 (i.e., the seat 16).

### [configuration of the adjusting apparatus]

Fig. 1 illustrates the configuration of the adjusting apparatus 10 arranged under the seat 16. Fig. 1 shows the adjusting apparatus 10 from which the seat 16 and the consoles 13 are removed.

The adjusting apparatus 10 includes supporting element 1, an axis element 2, swinging elements 4, first supporting axes 7, second supporting axes 8, and a worm element 6. On both sides of the seat 16, frames 9 engaged with the seat adjuster 12 extend in the front-rear direction. A set including the frame 9, the supporting element 1, the swinging element 4, the first supporting axis 7, the second supporting axis 8, and the console 13 is arranged on each side of the seat 16. Each of the supporting element 1, the swinging element 4, the first supporting axis 7, and the second supporting axis 8 is symmetrical in both shape and arrangement with the corresponding element arranged on the opposite sidle.

The supporting element 1 extending in the front-rear direction is arranged on the side of the frame 9. The supporting element 1 is in the form of a plate the surface of which is vertically arranged. The supporting element 1 has an slot hole 1a which extends in the front-rear direction and which is formed on the rear end of the supporting element 1, and also has a supporting board 5 that extends horizontally from the center portion of the supporting element 1. The supporting board 5 upwardly supports the console 13. In other words, the console 13 is supported by and fixed to the supporting element 1 via the supporting board 5.

The first supporting axis 7 is horizontally, and swingably and loosely inserted into the slot hole 1a. One end of the first supporting axis 7 is fixed to the frame 9 and the other end is engaged with a sliding plate 3. With this configuration, the supporting element 1 is supported by the frame 9 so that the rear end of the supporting element 1 is slidable in the front-rear direction by the length of the slot hole 1a and is rotatable with respect to frame 9. The sliding plate 3 slidably contacts with the plate surface of supporting element 1.

The right and left frames 9 are connected to each other at the front side of the seat 16 by the axis element 2, which is rotatably supported with respect to each frame 9. The wording "rotatable" here represents that the axis element 2 rotates around the axis center thereof in a limited range.
Portions in proximity to both ends 2a of the axis element 2 are fixed to one end of the swinging elements 4, so that the swinging elements 4 swing in conjunction with the axis element 2, that is to say the swinging elements 4 pivot on the axis element 2. In the meanwhile, the other end of each swinging element 4 is engaged with the second supporting axis 8, which supports and rotates the front end of the supporting element 1.

A worm wheel 2b in the form of a gear is formed on the outer circumference surface at each of both ends 2a of the axis element 2. There is arranged a worm element 6 having a female screw fitted together with the gear of the worm wheel 2b immediately beneath the worm wheel 2b.
The worm element 6 is rotatably supported by frame 9 and is coaxially coupled to a height adjusting handle 6a. The worm wheel 2b and the worm element 6 serve as a worm gear structure. The speed ratio of the rotational speed of the worm wheel 2b to the worm element 6 is set to be extremely small. As a result, the axis element 2 revolves on its axis very slowly when an operator turns the height adjusting handle 6a with normal speed.

Here, we assume that the distance between the axis center A of the axis element 2 inserted in the swinging element 4 and the axis center B of the second supporting axis 8 is represented by the distance a and the distance between the axis center B of the second supporting axis 8 inserted into supporting element 1 and the axis center C of the first supporting axis 7 positioned at the front end of the slot hole 1a is represented by the distance b as depicted by the side view Fig. 2. The first embodiment sets the lengths of the swinging element 4 and the supporting element 1 such that the distance between the axis center A of the axis element 2 and the axis center C of the first supporting axis 7 is equal to the distance a+b. However, the distance between the axis centers should by no means be limited to the above setting, and can be appropriately determined according to the lengths of the swinging element 4 and the supporting element 1 and the swing angle of the axis element 2.

The supporting element 1 serves as a lever of a crank-slider mechanism in which the supporting element 1 is coupled to the second supporting axis 8 so that the front end of the supporting element 1 is rotatable around axis element 2 and in which the rear end of the supporting element 1 is horizontally sildable. Any point of supporting element 1 (that is, any point on a coordinate connected to supporting element 1) describes a locus in an ellipse or an arc of an ellipse in conjunction with the swing of swinging element 4.

### [effects and advantages]

The above configuration of the adjusting apparatus 10 provides the following behaviors, effects and advantages.
First, when the first supporting axis 7 is in contact with the front end of the slot hole 1a of the supporting element 1, the supporting element 1 extends in the substantially horizontal direction as depicted in Fig. 2. Fig.4 (a) shows a framework of the crank-slider mechanism in solid line at that time. The supporting element 1 is located on the imaginary line connecting the axis center A of the axis element 2 and the axis center C of the first supporting axis 7.

Since the consoles 13 are fixed to the supporting element 1, the position of the operation levers 14 fixed to the consoles 13 can be assumed to be also fixed to the supporting element 1. On this assumption, the tip of the operation lever 14 is represented by reference number L₁ in Fig. 4(a).
When the height adjusting handle 6a is rotated, the rotation is transmitted to the worm wheel 2b via the worm gear structure. And then the axis element 2 revolves. That rotates the swinging element 4 engaged with the axis element 2 in conjunction with the rotation of the axis element 2, and consequently, the axis center B of the second supporting axis 8, that is, the front end of the supporting element 1 rotates around the axis center A of the axis element 2. In the meanwhile, the rear end of supporting element 1 slides forward in accordance with the movement of the front end of the same element.

Rotation of the axis element 2 simultaneously rotates swinging elements 4 arranged on both sides of the seat 16, so that the left and right supporting elements 1 arranged both sides of the seat 16 concurrently slide for the same distance at a time.
The rotation of the axis element 2 is allowed until the first supporting axis 7 comes in contact with the rear end of the slot hole 1a, as shown in Fig 3. At that time, the crank-slider mechanism is in the state depicted by the broken line in Fig. 4(a), in which the axis center B of the second supporting axis 8 is positioned substantially over the axis center A of the axis element 2. In this state, the supporting element 1 comes to an inclined position since the supporting element 1 moves to upward and forward from the horizontal position indicated by the solid line in the drawing.

In accordance with the movement of the supporting element 1, the tip of the operation lever 14 also moves. Since the supporting element 1 serves as the lever of the crank-slider mechanism, the operation lever 14 fixed to the supporting element 1 describes the locus in the form of an arc of an ellipse and moves to the position represented by the reference number L₁' in Fig. 4(a).
Here, supplementary description is made in relation to a locus described by movement of an operation lever to which a conventional adjusting apparatus is applied.

As depicted in Fig. 4(b), in an adjusting apparatus in which a supporting element that supports the console is pivotably supported at the rear end A' , pivoting of the supporting element similarly to the pivoting of the supporting element 1 of the first embodiment shifts the supporting element from the state of the solid line to the state of the broken line. At that time, the tip of the operation lever pivots around the rear end A' of the supporting element from the position L₂ to the position L₂'. In short, the horizontal distance of the movement is X₂. On the other hand, the adjusting apparatus 10 of the first embodiment moves the supporting element 1 for the horizontal distance X₁ as shown in Fig. 4(a), which is greatly reduced from that of the conventional technique.

The broken line in Fig. 3 illustrates the position of the operation lever 14 in the state illustrated in Fig. 2. As understood from the drawing, the position of operation lever 14 moves in substantially a vertical direction.
As a consequence, the first embodiment can set a locus of any point of the console 13 supported by the supporting element 1 in an ellipse locus. The first embodiment can also increase the amount of adjustment of the movement in the height direction, concurrently suppressing the movement in the front-rear direction. Namely, the position of the operation lever 14 mounted on the console 13 can be adjusted by a vertical movement. That can eliminate the requirement for adjustment of the position of the seat 16 after the adjustment of the height of the console 13, thereby enhancing the usability.

In addition, the left and the right consoles 13 can be adjusted by the same amount at a time, and the operator doesn't have to adjust the balance between heights of the left and the right consoles 13.
Further, since the adjusting apparatus 10 rotates the axis element 2 with the aid of the worm gear structure, it is possible to avoid the power transmission from the axis element 2 to the worm element 6. That can omit the requirement of a mechanism and/or an apparatus to fix the heights of the consoles 13 which have once been adjusted. The small speed ratio of the axis element 2 to the worm element 6 makes it possible for the operator to easily adjust the height using only a small amount of power. The adjusting apparatus 10 does not need a fixing element required for a conventional adjusting apparatus and additionally adjusts the height with ease, enabling minute adjustment of the height.

In the adjusting apparatus 10, the worm element 6, the axis element 2, and the swinging element 4 in addition to the height adjusting handle 6a are arranged at the front side of the seat 16. More specifically, in the crank-slider mechanism in which the first supporting axis 7 of the supporting element 1 is arranged at the rear side of the seat 16 and in which the second supporting axis 8 is arranged at the front side of the seat 16, arrangement of the worm gear structure (i.e., the worm wheel 2b of the axis element 2 and the worm element 6) at the front side of seat 16 allows the operator to keep sitting in the seat 16 while adjusting the height of the consoles 13, so that convenience to the operator can be enhanced.

Since the adjusting apparatus 10 adjusts the height of consoles 13 relative to the frames 9 engaged with the seat adjuster 12, the relative positions of the consoles 13 to the seat 16 can be advantageously maintained even if the height and the posture of the seat 16 vary in accordance with the adjustment of the position of the seat adjuster 12.

### [others]

The first embodiment of the present invention is described as above. The present invention should by no means be limited to the foregoing embodiment, and various changes and modifications can be suggested without departing from the gist of the present invention.

In the first embodiment, the lengths of the swinging element 4 and the supporting element 1 are set such that distance between the axis center A of the axis element 2 and the axis center C of the first supporting axis 7 comes to be equal to the distance a+b. Alternatively, the lengths of the swinging element 4 and the supporting element 1 may be set as depicted in Fig. 4(c). In this alternative, the distance between the axis center B of the second supporting axis 8 on supporting element 1 and the axis center C of the first supporting axis 7 positioned at the rear end of the slot hole 1a is regarded as distance b and the lengths of the swinging element 4 and the supporting element 1 are set such that the distance between the axis center A of the axis element 2 and the axis center C of the first supporting axis 7 comes to be equal to the distance b-a. This length setting can also move the operation lever 14 in a substantially vertical direction from position L₃ to position L₃'.

Further alternatively, it is possible to use a crank-slider mechanism opposite in the front-rear direction to the adjusting apparatus 10, as depicted in Fig. 4(d). In this alternative, the operation lever 14 can be moved in a substantially vertical direction from the position L₄ to position L₄'. The ellipse locus described by the movement of operation lever 14 varies depending on the sizes of the supporting element 1 and the swinging element 4, the positions of the first supporting axis 7 and the second supporting axis 8, and the length (the sliding range) and the extending direction (the sliding angle) of the slot hole 1a formed on the supporting element 1, and may therefore be appropriately determined to satisfy the requirement.

The first embodiment detailed above has two consoles 13 on both sides of the seat 16 as objects of height adjustment by the adjusting apparatus 10. However, a single console 13 may be provided on either side.
The first embodiment is described assuming that adjusting apparatus 10 is provided in the cab 17 of the hydraulic excavator 20. However, the adjusting apparatus 10 can be used to adjust the heights of consoles provided on various working machines such as cranes, wheel loaders, and agricultural motor tractors.

## Claims

1. An apparatus for adjusting height of a console which includes an operation lever and which is provided on one side of a driver's seat of a construction machine, comprising:
a supporting element, being arranged on the side of the driver's seat and extending in the direction from the front to the rear of the driver's seat, that upwardly supports the console;
an axis element, horizontally extending in the direction between the right side and the left side of the driver's seat, being supported rotatably with respect to said driver's seat;
a first supporting axis, being engaged with the driver' s seat, that supports a first end of said supporting element such that the first end of said supporting element slides in the direction from the front to the rear of the driver' s seat and pivots around said first supporting axis;
a swinging element having a first end which is engaged with said axis element and which is pivotable around the center axis of said axis element; and
a second supporting axis, being engaged with a second end of said swinging element, around which a second end of said supporting element pivots.

2. An apparatus for adjusting height of a console according to claim 1, wherein:
a set comprising the console, said supporting element, said swinging element, said first supporting axis and said second supporting axis is provided each of the both sides of the driver's seat;
said first supporting axis supports the first end of said supporting element arranged on the same side; and
the second end of said supporting element pivots around said second supporting axis arranged on the same side.

3. An apparatus for adjusting height of a console according to claim 1 or 2, further comprising a worm gear structure including:
a worm wheel formed in a gear on an outer circumference of said axis element; and
a worm element having a female screw that is fitted together with said worm wheel.

4. An apparatus for adjusting height of a console according to claim 3, wherein:
said worm gear structure is provided on a front side of the driver's seat;
said first supporting axis is provided on a rear side of the driver's seat and supports the rear end of said supporting element; and
the front end of said supporting element pivots around said second supporting axis.
